(19) Europäisches Patentamt
European Patent Office
Office européen des brevets

(11) **EP 3 155 054 B1**

(12) **EUROPÄISCHE PATENTSCHRIFT**

(45) Veröffentlichungstag und Bekanntmachung des Hinweises auf die Patenterteilung:
06.04.2022 Patentblatt 2022/14

(21) Anmeldenummer: **15727003.4**

(22) Anmeldetag: **10.06.2015**

(51) Internationale Patentklassifikation (IPC):
*C09D 5/18* *(2006.01)*     *C08K 3/00* *(2018.01)*

(52) Gemeinsame Patentklassifikation (CPC):
(C-Sets verfügbar)
**C09D 5/185; C08G 65/336; C08K 3/016;
C08K 3/22; C08K 3/32; C08K 5/053;
C08K 5/34922; C08L 75/04; C09D 171/02;**
C08K 5/0066; C08K 2003/2237; C08K 2003/323
(Forts.)

(86) Internationale Anmeldenummer:
**PCT/EP2015/062876**

(87) Internationale Veröffentlichungsnummer:
**WO 2015/189233 (17.12.2015 Gazette 2015/50)**

(54) **DÄMMSCHICHTBILDENDE ZUSAMMENSETZUNG UND DEREN VERWENDUNG**

COMPOSITION FORMING AN INSULATING LAYER AND USE OF THE SAME

COMPOSITION FORMANT UNE COUCHE ISOLANTE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2014 EP 14171878**

(43) Veröffentlichungstag der Anmeldung:
**19.04.2017 Patentblatt 2017/16**

(73) Patentinhaber: **Hilti Aktiengesellschaft**
**9494 Schaan (LI)**

(72) Erfinder:
• **MARAUSKA, Juliane**
**72766 Reutlingen (DE)**
• **JEROMENOK, Jekaterina**
**86153 Augsburg (DE)**
• **LANG, Martin**
**82152 Planegg (DE)**
• **SIMON, Sebastian**
**86807 Buchloe Lindenberg (DE)**

(56) Entgegenhaltungen:
**WO-A1-2010/131037     DE-A1-102012 221 451**

(52) Gemeinsame Patentklassifikation (CPC): (Forts.)

C-Sets
**C08K 3/22;**
**C08K 3/32;**
**C08K 5/053;**
**C08K 5/34922**

**Beschreibung**

Die vorliegende Erfindung betrifft eine zweikomponentige dämmschichtbildende Zusammensetzung mit intumeszierenden Eigenschaften, die ein Bindemittel auf Basis eines alkoxysilanfunktionalisierten Polymers, das alkoxyfunktionalisierte Silangruppen trägt, enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein- oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung lediglich durch Reaktion der Bindemittelbestandteile untereinander erfolgt.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zum einen zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nicht nach Verdunsten des Lösungsmittels bzw. des Wassers nachhärtet.

Um diesen Nachteil zu umgehen, wurden Zwei- oder Mehrkomponentensysteme auf Epoxid-Amin-Basis entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist. Diese haben jedoch den Nachteil, dass das Bindemittel eine sehr stabile und starre Polymermatrix mit oftmals hohem Erweichungsbereich bildet, was die Schaumbildung durch die Schaumbildner behindert. Daher müssen dicke Schichten aufgetragen werden, um eine ausreichende Schaumdicke für die Isolierung zu erzeugen. Dies ist wiederum nachteilig, da viel Material erforderlich ist. Damit diese Systeme aufgetragen werden können, sind häufig Verarbeitungstemperaturen von bis zu +70°C erforderlich, was die Anwendung dieser Systeme arbeitsaufwendig und teuer in der Installation macht. Ferner sind einige der verwendeten Bindemittelkomponenten toxisch oder in sonstiger Weise kritisch (z.B. reizend, ätzend), wie beispielsweise die bei den Epoxid-Amin-Systemen eingesetzten Amine oder Aminmischungen.

Der Erfindung lag daher die Aufgabe zugrunde, ein dämmschichtbildendes Beschichtungssystem der eingangs erwähnten Art zu schaffen, das die genannten Nachteile vermeidet, das insbesondere nicht lösemittel- oder wasserbasiert ist und eine schnelle, homogene Aushärtung aufweist und aufgrund der hohen Intumeszenz, d.h. der Bildung einer effektiven Aschekrustenschicht, nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine dämmschichtbildende Zusammensetzung mit einem alkoxysilanfunktionellen Polymer, welches terminiert und/oder als Seitengruppen entlang der Polymerkette alkoxyfunktionelle Silangruppen der allgemeinen Formel (I) enthält

$$-Si(R^1)_m(OR^2)_{3-m} \qquad (I),$$

worin $R^1$ für einen linearen oder verzweigten $C_1$-$C_{16}$-Alkylrest, bevorzugt für einen Methyl- oder Ethylrest, $R^2$ für einen linearen oder verzweigten $C_1$-$C_6$-Alkylrest und m für eine ganze Zahl von 0 bis 2 steht, und mit einem dämmschichtbildenden Brandschutzadditiv.

Erfindungsgemäß ist ein Polymer ein Molekül mit sechs oder mehr Wiederholungseinheiten, das eine Struktur aufweisen kann, die linear, verzweigt, sternförmig, gewunden, hyperverzweigt oder vernetzt sein kann. Polymere können eine einzelne Art von Wiederholungseinheiten aufweisen ("Homopolymere") oder sie können mehr als eine Art von Wiederholungseinheiten aufweisen ("Copolymere"). Wie hierin verwendet, umfasst der Begriff "*Polymer*" sowohl Präpolymere, welche auch Oligomere mit 2 bis 5 Wiederholungseinheiten umfassen können, wie die als Polymer eingesetzten alkoxysilanfunktionellen Verbindungen, welche in Gegenwart von Wasser unter Bildung von Si-O-Si-Bindungen miteinander reagieren, als auch die durch die eben genannte Reaktion gebildeten polymeren Verbindungen.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten aber auch im Vergleich zu einer Zusammensetzung gemäß der WO 2010/131037 A1 die Arbeitszeit erheblich reduziert werden kann und dass kein Lösemittel verwendet wird. Vorteilhaft, insbesondere gegenüber einer Zusammensetzung gemäß der WO 2010/131037 A1, ist ferner, dass das Aushärteverhalten einer erfindungsgemäßen Zusammensetzung unabhängig von der Luftfeuchtigkeit der Umgebung ist, in der die Zusammensetzung angewandt wird.

Ein weiterer Vorteil liegt darin, dass auf gesundheitsgefährdende und kennzeichnungspflichtige Substanzen, wie beispielsweise kritische Aminverbindungen, mit Ausnahme eines in sehr geringer Konzentration verwendeten Katalysators, weitgehend oder vollständig verzichtet werden kann.

Aufgrund des gegenüber den Systemen auf Epoxid-Amin-Basis niedrigeren Erweichungsbereiches der Polymermatrix ist die Intumeszenz hinsichtlich der Expansionsrate relativ hoch, so dass selbst mit dünnen Schichten eine große isolierende Wirkung erreicht wird. Hierzu trägt auch der mögliche hohe Füllgrad der Zusammensetzung mit Brandschutzadditiven bei. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch durch Hydrolyse und anschließende Polykondensation härtet. Damit ist nur ein geringer Volumenverlust durch das Abtrocknen von Lösemitteln oder bei wasserbasierten Systemen von Wasser zu verzeichnen. So ist bei einem klassischen System ein Lösemittelgehalt von etwa 25% typisch. Dies bedeutet, dass aus einer 10 mm-Schicht nur 7,5 mm als eigentliche Schutzschicht auf dem zu schützenden Substrat verbleiben. Bei der erfindungsgemäßen Zusammensetzung verbleiben mehr als 93% der Beschichtung auf dem zu schützenden Substrat.

Verglichen mit lösemittel- oder wasserbasierten Systemen, wenn sie ohne Grundierung aufgetragen werden, zeigen die erfindungsgemäßen Zusammensetzungen eine ausgezeichnete Haftung an unterschiedlichen metallischen und nicht metallischen Substraten, sowie eine ausgezeichnete Kohäsion und Schlagbeständigkeit.

Zum besseren Verständnis der Erfindung werden die folgenden Erläuterungen der hierin verwendeten Terminologie als sinnvoll erachtet. Im Sinne der Erfindung:

- bedeutet "*chemische Intumeszenz*" die Bildung einer voluminösen, isolierenden Ascheschicht durch aufeinander abgestimmte Verbindungen, die bei Hitzeeinwirkung miteinander reagieren;

- bedeutet "*physikalische Intumeszenz*" die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;

- bedeutet "*dämmschichtbildend*", dass im Brandfall ein fester mikroporöser Kohleschaums entsteht, so dass die gebildete feinporige und dicke Schaumschicht, die sogenannte Aschekruste, je nach Zusammensetzung ein Substrat gegen Hitze isoliert;

- ist ein "*Kohlenstofflieferant*" eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "*Kohlenstoffgerüstbildner*" bezeichnet;

- ist ein "*Säurebildner*" eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff "*Dehydrierungskatalysator*" verwendet;

- ist ein "*Treibmittel*" eine Verbindung, die sich bei erhöhter Temperatur unter Entwicklung inerter, d.h. nicht-brennbarer Gase zersetzt und gegebenenfalls das Erweichte Bindemittel zu einem Schaum aufbläht (Intumeszenz); dieser Begriff wird gleichbedeutend mit "*Gasbildner*" verwendet;

- ist ein "*Aschekrustenstabilisator*" eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern.

Erfindungsgemäß umfasst das alkoxysilanfunktionelle Polymer ein Grundgerüst, das aus der Gruppe, bestehend aus einer Alkylkette, Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, wie Polyethylen oder Polypropylen, Polyisobutylen, Polysulfid, Kautschuk, Neopren, Phenolharz, Epoxidharz, Melamin ausgewählt ist. Das Grundgerüst kann dabei linear oder verzweigt (lineares Grundgerüst mit Seitenketten entlang der Kette des Grundgerüstes) aufgebaut sein und enthält terminierend, d.h. als Endgruppen eines linearen Grundgerüstes bzw. als Endgruppen des linearen Grundgerüstes und als Endgruppen der Seitengruppen, alkoxyfunktionelle Silangruppen, bevorzugt mindestens zwei alkoxyfunktionelle Silangruppen. Bevorzugt besteht das Grundgerüst aus Polypropylenglykol oder Polyurethan.

Die alkoxyfunktionelle Silangruppe hat die allgemeinen Formel (I)

$$-Si(R^1)_m(OR^2)_{3-m} \qquad (I),$$

worin $R^1$ für einen linearen oder verzweigten $C_1$-$C_{16}$-Alkylrest, bevorzugt für einen Methyl- oder Ethylrest, $R^2$ für einen linearen oder verzweigten $C_1$-$C_6$-Alkylrest, bevorzugt für einen Methyl- oder Ethylrest, und m für eine ganze Zahl von 0 bis 2, bevorzugt 0 oder 1 steht.

Bevorzugt ist die alkoxyfunktionelle Silangruppe über eine Gruppe, wie eine weitere, andere funktionelle Gruppe (X = z.B. -S-, -OR, -NHR, -NR$_2$), die entweder selbst als Elektronendonor fungieren kann oder ein Atom enthält, welches als Elektronendonor fungieren kann, an das Grundgerüst gebunden, wobei die beiden funktionellen Gruppen, d.h. die weitere funktionelle Gruppe und die alkoxyfunktionelle Silangruppe über eine Methylenbrücke oder eine Propylenbrücke miteinander verbunden sind ($-X-CH_2-Si(R^1)_m(OR^2)_{3-m}$ bzw. $-X-C_3H_6-Si(R^1)_m(OR^2)_{3-m}$).

Am stärksten bevorzugt handelt es sich bei den alkoxysilanfunktionellen Polymeren um Polymere, bei denen das Grundgerüst über eine Urethangruppe mit Silangruppen terminiert ist, wie beispielsweise Dimethoxy(methyl)silylmethylcarbamat-terminierte Polyether und Polyurethane, Dimethoxy(methyl)silylpropylcarbamat-terminierte Polyether und Polyurethane, Trimethoxysilylmethylcarbamat-terminierte Polyether und Polyurethane, Trimethoxysilylpropylcarbamat-terminierte Polyether und Polyurethane oder Mischungen aus diesen.

Beispiele geeigneter Polymere umfassen silanterminierte Polyether (z.B. Geniosil® STP-E 10, Geniosil® STP-E 15, Geniosil® STP-E 30, Geniosil® STP-E 35, Geniosil® XB 502, Geniosil® WP 1 von Wacker Chemie AG, Polymer ST61, Polymer ST75 und Polymer ST77 von Evonik Hanse) und silanterminierte Polyurethane (Desmoseal® S XP 2458, Desmoseal® S XP 2636, Desmoseal® S XP 2749, Desmoseal® S XP 2821 von Bayer, SPUR+*1050MM, SPUR+*1015LM, SPUR+* 3100HM, SPUR+* 3200HM von Momentive).

Die Viskosität dieser alkoxysilanfunktionellen Polymere liegt bevorzugt zwischen 0,1 und 50.000 Pa·s, stärker bevorzugt zwischen 0,5 und 35.000 Pa·s und am stärksten bevorzugt zwischen 0,5 und 30.000 Pa·s.

Die Viskosität wurde mit einem Kinexus Rotationsrheometer durch Messung einer Fließkurve bei 23°C bestimmt, bei den angegebenen Werten handelt es sich um den Messwert bei 215 s$^{-1}$.

Als alternative Polymere können bevorzugt solche verwendet werden, bei denen die alkoxyfunktionellen Silangruppen nicht terminal in das Gerüst des Polymers eingebaut werden, sondern gezielt seitenständig verteilt über die Kette des Grundgerüstes. Über die eingebauten mehreren Vernetzungseinheiten können wichtige Eigenschaften, wie die Vernetzungsdichte, gesteuert werden. Als geeignetes Beispiel kann hier die Produktlinie TEGOPAC® der Evonik Goldschmidt GmbH genannt werden, wie TEGOPAC BOND 150, TEGOPAC BOND 250 und TEGOPAC SEAL 100. In diesem Zusammenhang wird beispielhaft auf die DE 102008000360 A1, die DE 102009028640 A1, die DE 102010038768 A1 und die DE 102010038774 A1 und verwiesen.

Gewöhnlich trägt bei diesen alkoxysilanfunktionellen Polymeren das Polymer 2 bis 8 alkoxysilanfunktionelle Silangruppen pro Präpolymer-Molekül.

Je nach Kettenlänge des Grundgerüstes, Alkoxyfunktionalität des Polymers und Sitz der alkoxyfunktionellen Silangruppen können der Vernetzungsgrad des Bindemittels und somit sowohl die Festigkeit der entstehenden Beschichtung als auch deren elastische Eigenschaften eingestellt werden.

Gewöhnlich beträgt die Menge des Bindemittels 5 bis 60 Gew.-%, bevorzugt 5 bis 50 Gew.-%, stärker bevorzugt 10 bis 40 Gew.-%, bezogen auf die Zusammensetzung. Erfindungsgemäß enthält die Zusammensetzung ein dämmschichtbildendes Brandschutzadditiv, wobei das Additiv sowohl einzelne Verbindungen als auch ein Gemisch von mehreren Verbindungen umfassen kann.

Zweckmäßig wird als dämmschichtbildendes Brandschutzadditiv ein solches eingesetzt, das durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirkt. Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Treibmittel und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von $SO_x$, $NO_x$, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferant, einen Dehydrierungskatalysator und ein Treibmittel als auch thermisch expandierbare Verbindungen umfasst.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von $\leq 50\ \mu m$, vorzugsweise von 0,5 bis 10 $\mu m$ besitzt. Im Fall der Verwendung des teilchenförmigen Metalls in Form von Fasern, Fäden und/oder Whiskers ist eine Dicke von 0,5 bis 10 $\mu m$ und eine Länge von 10 bis 50 $\mu m$ bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern,

Melaminpolyzinksulfaten, Ferrogläsern oder Calciumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Das dämmschichtbildende Brandschutzadditiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des dämmschichtbildenden Brandschutzadditives in der Gesamtformulierung so hoch wie möglich eingestellt. Bevorzugt beträgt sein Anteil in der Gesamtformulierung 35 bis 85 Gew.-% und besonders bevorzugt 40 bis 85 Gew.-%.

Aus der WO 2010/131037 A1 ist eine Zusammensetzung bekannt, die auf Silan-terminierten Polyurethanen oder Silan-terminierten Polyethern als Bindemittel basiert, mit dazu kompatiblen Weichmachern und mit intumeszierenden Additiven. Diese Zusammensetzung härtet durch Feuchtigkeit aus. Dementsprechend beginnt die Aushärtung der Zusammensetzung an der Oberfläche. Dies ist jedoch dahingehend nachteilig, dass die Aushärtung stark von der Luftfeuchtigkeit und von der Schichtdicke abhängt, was im Allgemeinen zu langen Aushärtezeiten oder in sehr trockener Umgebung zu keiner Aushärtung mehr führt. Nachteilig ist ferner, dass die Aushärtung stark inhomogen ist und zudem die Vernetzungsdichte stark schwanken kann.

Die Zusammensetzung enthält Wasser als Vernetzungsmittel. Hierdurch kann eine homogenere und schnellere Durchhärtung des Bindemittels erreicht werden, verglichen mit einer Zusammensetzung gemäß der WO 2010/131037 A1. Die Aushärtung der Zusammensetzung wird somit weitgehend unabhängig von der absoluten Luftfeuchtigkeit und die Zusammensetzung härtet auch unter extrem trockenen Bedingungen zuverlässig und schnell aus.

Der Wassergehalt in der Zusammensetzung kann bis zu 5 Gew.-%, bezogen auf das Polymer, betragen, wobei ein Gehalt im Bereich zwischen 0,1 und 5 Gew.-% bevorzugt, zwischen 0,5 und 3 Gew.-% stärker bevorzugt und zwischen 0,6 und 2 Gew.-% noch stärker bevorzugt ist.

Neben dem eigentlichen Wasser als Vernetzungsmittel kann die Zusammensetzung weitere Vernetzungsmittel andere als Wasser enthalten. Diese werden hierin als Co-Vernetzungsmittel bezeichnet. Durch das Co-Vernetzungsmittel können verschiedene Eigenschaften, wie Haftung zum Untergrund, bessere Benetzung der Additive und Aushärtungsgeschwindigkeit der Zusammensetzung gezielt optimiert und maßgeschneidert werden.

Geeignete Co-Vernetzungsmittel sind aus der Gruppe basischer Silan-funktioneller Verbindungen ausgewählt, etwa Aminosilane, wie Aminopropyltrimethoxysilan, Aminopropyltriethoxysilan, Aminopropylmethyldimethoxysilan, Aminopropylmethyldiethoxysilan, *N*-(2-Aminoethyl)-aminopropyltrimethoxysilan, *N*-(2-Aminoethyl)aminopropyltrimethoxysilan, N-(2-Aminoethyl)-aminopropyltriethoxysilan, N-(2-Aminoethyl)-aminopropyl-methyldimethoxysilan, *N*-Cyclohexylaminomethyltriethoxysilan, *N*-Cyclohexyl-aminomethyl-methyldiethoxysilan, *N*-Cyclohexylaminomethyltrimethoxysilan, *N*-Cyclohexylaminomethy1-methyldimethoxysilan.

Diese Co-Vernetzungsmittel sind bevorzugt in einer Menge von 0,05 bis 5,0 Gew.-%, bezogen auf die gesamte Zusammensetzung, stärker bevorzugt von 0,1 bis 3,0 Gew.-% und am stärksten bevorzugt von 0,5 bis 2,0 Gew.-%, enthalten.

Damit das alkoxysilanfunktionelle Polymer und das Vernetzungsmittel nicht vorzeitig miteinander in Kontakt gebracht werden und die Aushärtung vorzeitig initiiert wird, sind diese zweckmäßig reaktionsinhibierend voneinander getrennt.

Die Zusammensetzung enthält einen Katalysator, der unter Aminverbindungen ausgewählt ist, die geeignet sind, die Bildung der Si-O-Si-Bindungen zwischen den Silan-Gruppen der Polymere zu katalysieren.

Bevorzugt ist der Katalysator ausgesucht aus der Gruppe der organischen Amine, wie Triethylamin, Tributylamin, Trioctylamin, Monoethanolamin, Diethanolamin, Triethanolamin, Triisopropanolamin, Tetramethylendiamin, Quadrol, Diethylentriamin, Dimethylanilin, Protonenschwamm, *N,N'*-Bis[2-(dimethylamino)ethyl]-*N,N'*-dimethylethylendiamin, *N,N*-Dimethylcyclohexylamin, *N*-Dimethylphenlyamin, 2-Methylpentamethylenediamin, 2-Methylpentamethylenediamin, 1,1,3,3-Tetramethylguanidin, 1,3-Diphenylguanidin, Benzamidin, *N*-Ethylmorpholin, 2,4,6-Tris(dimethylaminomethyl)phenol (TDMAMP); 1,8-Diazabicyclo[5.4.0]undec-7-en (DBU) und 1,5-Diazabicyclo(4.3.0)non-5-en (DBN); *n*-Pentylamin, *n*-Hexylamin, Di-*n*-propylamin und Ethylendiamin; DABCO, DMAP, PMDETA, Imidazol und 1-Methylimidazol oder Salze aus Aminen und Carbonsäuren und Polyetheramine, wie Polyethermonoamine, Polyetherdiamine oder Polyethertriamine, wie z.B. die Jeffamine von Huntsman und Etheramine, wie z.B. die Jeffkats von Huntsman. In dieser Hinsicht wird Bezug genommen auf die Anmeldungen WO 2011/157562 A1 und WO 2013/003053 A1.

Die Art und die Menge des Katalysators werden abhängig von dem gewählten alkoxysilanfunktionellen Polymer und der gewünschten Reaktivität gewählt.

In einer weiteren Ausführungsform enthält die erfindungsgemäße Zusammensetzung ferner mindestens einen weiteren Bestandteil, ausgewählt unter Weichmachern, Wasserfängern, organischen und/oder anorganischen Zuschlagstoffen und/oder weiteren Additiven enthält.

Der Weichmacher hat die Aufgabe, das ausgehärtete Polymernetzwerk weich zu machen.

Ferner hat der Weichmacher die Aufgabe, eine zusätzliche flüssige Komponente einzubringen, so dass die Füllstoffe vollständig benetzt werden und die Viskosität so eingestellt wird, dass die Beschichtung mit einem Sprühgerät verarbeitungsfähig wird. Der Weichmacher kann in solch einer Menge in der Zusammensetzung enthalten sein, dass er die eben beschriebenen Funktionen hinreichend erfüllen kann.

Bevorzugt ist der Weichmacher unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Alkandisäure, wie Buttersäure, Glutarsäure, Pimelinsäure, Adipinsäure, Korksäure, Azelainsäure, Sebacinsäure, Fumarsäure, Maleinsäure, Itaconsäure, Caprylsäure und Zitronensäure, Ricinolsäure, Phosphate, Alkylphosphatestern und Derivaten von Polyestern und Polyethern, Glykolethern und -estern, epoxidierten Ölen, Sulfonamiden, Terpenen, Öle und Derivate davon, wie Sojaöl, $C_{10}$-$C_{21}$-Alkylsulfonsäureestern des Phenols, Alkane, Cycloalkane und Alkylestern ausgewählt. Stärker bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerin mit Epoxgruppen und Esterderivate der Phosphate ausgewählt. Am stärksten bevorzugt ist der Weichmacher Dioctyladipat, Bis(2-ethylhexyl)terephthalat, Trihydroxymethylpropylcaprylat, Triethylenglycol-bis(2-ethylhexanoat), 1,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und *n*-Decylsuccinat.

Beispiele hierfür sind Plastomoll DOA, Eastman (TM) DOTP Plasticizer (Eastman), Esterex NP 343 (Excon Mobil), Solusolv 2075 (Butvar), Hexamoll DINCH (BASF), Mesamoll II (Lanxess), Triethylcitrat (Sigma Aldrich), Paraplex G-60 (Hallstar), Disflammol TOF (Lanxess) und Uniplex LXS TP ODS (Lanxess).

In der Zusammensetzung kann der Weichmacher bevorzugt in einer Menge von 0,1 bis 40 Gew.-%, stärker bevorzugt 1 bis 35 Gew.-% und noch stärksten bevorzugt 5 bis 25 Gew.%, bezogen auf die gesamte Zusammensetzung, enthalten sein.

Um eine vorzeitige Reaktion mit Restfeuchtigkeit der eingesetzten Füllstoffe oder der Luftfeuchtigkeit zu verhindern, werden der Zusammensetzung üblicherweise Wasserfänger zugesetzt. Bevorzugt ist der Wasserfänger ein organofunktionelles Alkoxysilan oder ein oligomeres organofunktionelles Alkoxysilan, stärker bevorzugt ein vinylfunktionelles Silan, ein oligomeres vinylfunktionelles Silan, ein vinyl-/alkylfunktionelles Silan, ein oligomeres amino-/alkylfunktionelles Silan, ein acetoxy-/alkylfunktionelles Silan, ein aminofunktionelles Silan, ein oligomeres aminfunktionelles Silan, ein Carbamatosilan oder ein methacryloxyfunktionelles Silan. Am stärksten bevorzugt ist der Wasserfänger Di*tert*-butoxydiacetoxysilan, Bis(3-triethoxysilylpropyl)amin, Bis(3-trimethoxypropyl)amin, 3-Aminopropylmethyldiethoxysilan, 3-Aminopropyltriethoxysilan, Vinyltriethoxysilan, Vinyltrimethoxysilan, Vinyltris(2-methoxyethoxy)silan, *N*-Cyclohexylaminomethyltriethoxysilan, Vinyldimethoxymethylsilan, Vinyltriacetoxysilan, 3-Methacryloxypropyltrimethoxysilan, Methacryloxymethyl-methyldimethoxysilan, Methacryloxymethyltrimethoxysilan, 3-Methacryloxypropyltriacetoxysilan, *N*-Methyl[3-(Trimethoxysilyl)propyl]carbamat, *N*-Trimethoxysilylmethyl-*O*-methylcarbamat, *N*-Dimethoxy(methyl)silyl-methyl-*O*-methylcarbamat oder Kombinationen aus diesen.

Beispiele hierfür sind Dynasylan 1146, Dynasylan 6490, Dynasylan 6498, Dynasylan BDAC, Dynasylan 1122, Dynasylan 1124, Dynasylan 1133, Dynasylan 1204, Dynasylan 1505, Dynasylan 1506, Dynasylan AMEO, Dynasylan AMEO-T, Dynasylan VTEO, Dynasylan VTMO, Dynasylan VTMOEO, Dynasylan 6598 (Evonik), Geniosil XL 926, Geniosil XL 10, Geniosil XL 12, Geniosil GF 56, Geniosil GF 62, Geniosil GF 31, Geniosil XL 32, Geniosil XL 33, Geniosil GF 39, Geniosil GF 60, Geniosil XL 63 und Geniosil XL 65 (Wacker).

Diese Wasserfänger sind bevorzugt in einer Menge von 0 bis 5 Gew.-%, bezogen auf die gesamte Zusammensetzung, stärker bevorzugt von 0,5 bis 4 Gew.-% und am stärksten bevorzugt von 0,7 bis 3 Gew.-%, enthalten.

Optional können der erfindungsgemäßen Zusammensetzung ein oder mehrere reaktive Flammhemmer als weitere Additive zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Zusätzliche Additive, wie Verdicker und/oder Rheologieadditive, sowie Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die Zusammensetzung kann neben den bereits beschriebenen Additiven gegebenenfalls übliche Hilfsmittel wie Netzmittel, etwa auf Basis von Polyacrylaten und/oder Polyphosphaten, Entschäumer, wie Silikonentschäumer, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Die erfindungsgemäße Zusammensetzung wird als Zweikomponenten-System konfektioniert. Da die Zusammensetzung Wasser als ein Vernetzungsmittel enthält, muss dieses reaktionsinhibierend vom alkoxysilanfunktionellen Polymer gelagert werden. Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein. Zweckmäßig sind der Wasserfänger und das Co-Vernetzungsmittel, sofern vorhanden, von der das Wasser als Vernetzungsmittel enthaltenen Komponente getrennt zu konfektionieren.

Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben.

Es ist auch möglich, dass eine Komponente lediglich das Wasser als Vernetzungsmittel enthält. Alternativ kann das Wasser als Vernetzungsmittel zusammen mit anderen Bestandteilen, wie Weichmachern, Additiven und/oder Füllstoffen, in einer Komponente des Zweikomponenten-Systems enthalten sein.

Das dämmschichtbildende Brandschutzadditiv kann dabei als Gesamtmischung oder in Einzelkomponenten aufgeteilt in einer Komponente oder mehreren Komponenten enthalten sein. Die Aufteilung des Brandschutzadditivs erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Bevorzugt ist, wenn das dämmschichtbildende Brandschutzadditiv eine Kohlenstofflieferant, ein Treibmittel und einen Dehydrierungskatalysator enthält, der Kohlenstofflieferant, das Treibmittel und der Dehydrierungskatalysator, derart auf die beiden Komponenten aufgeteilt, dass diese Verbindungen (Einzelbestandteile des dämmschichtbildenden Brandschutzadditivs) und die anderen Bestandteile der Zusammensetzung, d.h. das alkoxysilanfunktionelle Polymer und das Vernetzungsmittel, reaktionsinhibierend getrennt sind. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Enthält die Zusammensetzung ferner einen Aschekrustenstabilisator, so kann dieser in einer der beiden Komponenten des Zweikomponenten-Systems enthalten sein. Alternativ kann der Aschekrustenstabilisator auch auf die beiden Komponenten aufgeteilt sein. Dementsprechend ist der Aschekrustenstabilisator derart auf die erste Komponente und die zweite Komponente aufgeteilt, dass die erste Komponente oder die zweite Komponente zumindest einen Teil des Aschekrustenstabilisators und die zweite Komponente oder die erste Komponente gegebenenfalls einen weiteren Teil des Aschekrustenstabilisators enthält.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen und dem System gemäß der WO 2010/131037 A1, durch eine relativ schnelle Aushärtung durch eine Hydrolyse und anschließende Polykondensationsreaktion und damit nicht notwendige physikalische Trocknung aus. Über den Wassergehalt in der Zusammensetzung können darüber hinaus die Aushärteeigenschaften und die Eigenschaften der getrockneten (ausgehärteten) Zusammensetzung gesteuert werden. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, welche in lösemittel- oder wasserbasierten Systemen zu einem Auswaschen von wasserlöslichen Bestandteilen, wie dem Ammoniumpolyphosphat, führen kann, bzw. bei der Aufnahme von Staub zu einer reduzierten Intumeszenz. Aufgrund des niedrigen Erweichungspunktes des Bindemittels und des hohen Feststoffanteils, ist selbst bei geringer Schichtdicke die Expansionsrate bei Hitzeeinwirkung hoch.

Deshalb ist die erfindungsgemäße zweikomponentige Zusammensetzung als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung.

Die vorliegende Erfindung betrifft auch Objekte, die erhalten werden, wenn die erfindungsgemäße Zusammensetzung ausgehärtet ist. Die Objekte haben ausgezeichnete dämmschichtbildende Eigenschaften.

Die folgenden Beispiele dienen der weiteren Erläuterung der Erfindung.

**AUSFÜHRUNGSBEISPIELE**

Für die Herstellung von erfindungsgemäßen dämmschichtbildenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder bevorzugt während des Versprühens vermischt und appliziert.

Es wurden jeweils das Aushärteverhalten der Zusammensetzung beobachtet, anschließend der Intumeszenzfaktor und die relative Aschekrustenstabilität bestimmt. Hierzu wurde die Massen jeweils in eine runde Teflon-Form mit etwa 2 mm Tiefe und 48 mm Durchmesser gegeben. Die Proben wurden bei einer Temperatur von +23°C und einer relativen Luftfeuchtigkeit von 35% ausgehärtet.

Zur Bestimmung des Intumeszenzfaktors und der relativen Aschekrustenstabilität wurde ein Muffelofen auf 600°C vorgeheizt. Es wurde eine Mehrfachmessung der Probendicke mit der Schieblehre durchgeführt und der Mittelwert $h_M$ berechnet. Dann wurden die Proben jeweils in eine zylindrische Stahlform eingebracht und für 30 min im Muffelofen erhitzt. Nach Abkühlen auf Raumtemperatur wurde die Schaumhöhe $h_{E1}$ zunächst zerstörungsfrei bestimmt (Mittelwert einer Mehrfachmessung). Der Intumeszenzfaktor $I$ berechnet sich wie folgt:

$$\text{Intumeszenzfaktor I:} \qquad I = h_{E1} : h_M$$

Anschließend ließ man in der zylindrischen Stahlform ein definiertes Gewicht (m = 105 g) aus einer definierten Höhe (h = 100 mm) auf den Schaum fallen und bestimmte die nach dieser teilweise zerstörenden Einwirkung verbleibende Schaumhöhe $h_{E2}$. Die relative Aschekrustenstabilität wurde wie folgt berechnet:

$$\text{relative Aschekrustenstabilität (AKS): } AKS = h_{E2} : h_{E1}$$

Für das Vergleichsbeispiel und die folgenden Beispiele 1 bis 3 wurde als dämmschichtbildendes Brandschutzadditiv folgende Formulierung hergestellt und die Mischung in der jeweils angegebenen Menge eingesetzt:
dämmschichtbildendes Brandschutzadditiv

| Verbindungen | Menge [g] |
|---|---|
| Pentaerythrit | 8,7 |
| Melamin | 8,7 |
| Ammoniumpolyphosphat | 16,6 |
| Titandioxid | 7,9 |

**Vergleichsbeispiel 1**

Als Vergleich diente ein auf wässriger Dispersionstechnologie basiertes kommerzielles Brandschutzprodukt (Hilti CFP S-WB).

**Vergleichsbeispiel 2**

Als weiterer Vergleich diente ein Standard-Epoxy-Amin-System (Jeffamin® T-403, flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH) und 1,6-Hexandioldiglycidylether), das zu 60 % mit einem Intumeszenzgemisch analog den obigen Beispielen gefüllt ist, getestet.

**Vergleichsbeispiel 3**

Als weiterer Vergleich diente ein Standard-Epoxy-Amin-System (Isophorondiamin, Trimethylolpropantriacrylat und flüssiges, lösemittelfreies und kristallisationsstabiles Epoxidharz, bestehend aus niedermolekularen Epoxidharzen auf Basis Bisphenol A und Bisphenol F (Epilox® AF 18-30, Leuna-Harze GmbH)), das zu 60 % mit einem Intumeszenzgemisch analog den obigen Beispielen gefüllt ist, getestet.

**Beispiel 1** (nicht erfindungsgemäss)

*Bestandteile*

| Verbindungen | Menge [g] |
|---|---|
| Silanterminiertes Prepolymer [1] | 10,9 |
| Vinyltrimethoxysilan [2] | 0,5 |
| Aminoproyltriethoxysilan [3] | 0,1 |
| Dioctylzinndilaurat [4] | 0,1 |
| Wasser | 0,2 |
| [1] Desmoseal S XP 2749<br>[2] Geniosil® XL 10<br>[3] Dynasylan® AMEO<br>[4] TIB KAT 216 | |

*dämmschichtbildendes Brandschutzadditiv*

| Verbindungen | Menge [g] |
|---|---|
| wie oben angegeben | 18,2 |

**Beispiel 2** (nicht erfindungsgemäss)

*Bestandteil A*

| Verbindungen | Menge [g] |
|---|---|
| Silanterminierter Polyether[5] | 16,1 |
| Vinyltrimethoxysilan[6] | 0,7 |
| Aminoproyltriethoxysilan[7] | 0,5 |
| Weichmacher[8] | 2,5 |
| 1,8-Diazabicyclo[5.4.0]undec-7-en N,N'-Dibutylharnstoff | 0,05 |
| Wasser | 0,2 |
| [5] GENIOSIL® STP-E 10<br>[6] Geniosil® XL 10<br>[7] Dynasylan® AMEO<br>[8] Mesamoll II | |

*dämmschichtbildendes Additiv*

| Verbindungen | Menge [g] |
|---|---|
| wie oben angegeben | 30,0 |

**Beispiel 3** (nicht erfindungsgemäss)

*Bestandteil A*

| Verbindungen | Menge [g] |
|---|---|
| Silanterminiertes Polymer [9] | 16,0 |
| Vinyltrimethoxysilan [10] | 0,7 |
| Aminoproyltriethoxysilan [11] | 0,5 |
| 1,8-Diazabicyclo[5.4.0]undec-7-en N,N'-Dibutylharnstoff | 0,2 |
| Wasser | 0,2 |
| [9] Desmoseal S XP 2749<br>[10] Geniosil® XL 10<br>[11] Dynasylan® AMEO | |

*dämmschichtbildendes Additiv*

| Verbindungen | Menge [g] |
|---|---|
| wie oben angegeben | 30,0 |

Tabelle 1: Ergebnisse der Messungen des Intumeszenzfaktors und der Aschenkrustenstabilität

| Beispiel | Intumeszenzfaktor I (Vielfaches) | relative Aschenkrustenstabilität AKS (Vielfaches) | Probendicke $h_M$ (mm) |
|---|---|---|---|
| 1 | 7,0 | 0,74 | 3,9 |
| 2 | 12 | 0,83 | 3,8 |
| 3 | 14 | 0,52 | 2,8 |
| Vergleichsbeispiel 1 | 36 | 0,62 | 1,8 |
| Vergleichsbeispiel 2 | 22 | 0,04 | 1,6 |
| Vergleichsbeispiel 3 | 1,7 | 0,60 | 1,2 |

**Patentansprüche**

1. Zweikomponenten-System umfassend eine dämmschichtbildende Zusammensetzung mit einem alkoxysilanfunktionellen Polymer, welches terminiert und/oder als Seitengruppen entlang der Polymerkette alkoxyfunktionelle Silangruppen der allgemeinen Formel (I) enthält

$$-Si(R^1)_m(OR^2)_{3-m} \qquad (I),$$

worin $R^1$ für einen linearen oder verzweigten $C_1$-$C_{16}$-Alkylrest, $R^2$ für einen linearen oder verzweigten $C_1$-$C_6$-Alkylrest und m für eine ganze Zahl von 0 bis 2 steht, und mit einem dämmschichtbildenden Brandschutzadditiv, wobei die Zusammensetzung ferner Wasser als Vernetzungsmittel und einen Katalysator, der unter Aminverbindungen ausgewählt ist, enthält, **dadurch gekennzeichnet, dass** das Vernetzungsmittel reaktionsinhibierend von dem alkoxyfunktionellen Polymer getrennt ist.

2. Zusammensetzung nach Anspruch 1, wobei das Polymer ein Grundgerüst umfasst, das aus der Gruppe, bestehend aus einer Alkylkette, einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, Polyisobutylen, Polysulfid, Kautschuk, Neopren, Phenolharz, Epoxidharz und Melamin, ausgewählt ist.

3. Zusammensetzung nach Anspruch 1 oder 2, wobei das alkoxysilanfunktionelle Polymer mindestens 2 alkoxyfunktionelle Silangruppen trägt.

4. Zusammensetzung nach einem der vorhergehenden Ansprüche, wobei das dämmschichtbildende Brandschutzadditiv ein Gemisch umfasst, das mindestens einen Dehydrierungskatalysator, mindestens ein Treibmittel und gegebenenfalls mindestens einen Kohlenstofflieferant und/oder mindestens eine thermisch expandierbare Verbindung enthält.

5. Zusammensetzung nach Anspruch 4, wobei das Brandschutzadditiv ferner einen Aschekrustenstabilisator enthält.

6. Zusammensetzung nach einem der vorhergehenden Ansprüche, wobei die Zusammensetzung ferner ein weiteres Vernetzungsmittel (Co-Vernetzungsmittel) enthält.

7. Zusammensetzung nach einem der vorhergehenden Ansprüche, wobei die Zusammensetzung ferner mindestens einen weiteren Bestandteil, ausgewählt unter Weichmachern, Wasserfängern, anorganischen Füllstoffen und/oder weiteren Additiven, enthält.

8. Verwendung der Zusammensetzung nach einem der Ansprüche 1 bis 7, als Beschichtung.

9. Verwendung nach Anspruch 8 für die Beschichtung von Stahlkonstruktionselementen oder von nicht metallischen Bauteilen.

10. Verwendung nach einem der Ansprüche 8 bis 9 als Brandschutzschicht.

11. Gehärtete Objekte, erhalten durch Härten der Zusammensetzung nach einem der Ansprüche 1 bis 7.

**Claims**

1. Two-component system comprising an insulation layer-forming composition having an alkoxysilane-functional polymer which contains alkoxy-functional silane groups having the general formula (I), terminated and/or as side groups along the polymer chain,

$$-Si(R^1)_m(OR^2)_{3-m} \qquad (I),$$

where $R^1$ is a linear or branched $C_1$-$C_{16}$ alkyl functional group, $R^2$ is a linear or branched $C_1$-$C_6$ alkyl functional group and m is an integer from 0 to 2, and comprising an insulation layer-forming fire protection additive, the composition furthermore containing water as a cross-linking agent and a catalyst selected from amine compounds, **characterized in that** the cross-linking agent is separated from the alkoxy-functional polymer in a reaction-inhibiting manner.

2. Composition according to claim 1, wherein the polymer comprises a backbone which is selected from the group consisting of an alkyl chain, a polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, polyisobutylene, polysulfide, rubber, neoprene, phenolic resin, epoxy resin, and melamine.

3. Composition according to either claim 1 or claim 2, wherein the alkoxysilane-functional polymer carries at least 2 alkoxy-functional silane groups.

4. Composition according to any of the preceding claims, wherein the insulation layer-forming fire protection additive comprises a mixture which contains at least one dehydrogenation catalyst, at least one blowing agent, and optionally at least one carbon source and/or at least one thermally expandable compound.

5. Composition according to claim 4, wherein the fire protection additive further contains an ash crust stabilizer.

6. Composition according to any of the preceding claims, wherein the composition furthermore contains another cross-linking agent (co-cross-linking agent).

7. Composition according to any of the preceding claims, wherein the composition furthermore contains at least one further constituent selected from plasticizers, water scavengers, inorganic fillers and/or further additives.

8. Use of the composition according to any of claims 1 to 7 as a coating.

9. Use according to claim 8 for coating steel construction elements or non-metal components.

10. Use according to any of claims 8 to 9 as a fire protection layer.

11. Cured objects obtained by curing the composition according to any of claims 1 to 7.

**Revendications**

1. Système à deux composants comprenant une composition intumescente comprenant un polymère à fonction alcoxysilane, lequel se termine par et/ou contient en tant que groupes latéraux le long de la chaîne polymère des groupes silane à fonction alcoxy de formule générale (I)

$$-Si(R^1)_m(OR^2)_{3-m} \qquad (I),$$

où $R^1$ est un radical alkyle en $C_1$-$C_{16}$ linéaire ou ramifié, $R^2$ est un radical alkyle en $C_1$-$C_6$ linéaire ou ramifié et m est un nombre entier de 0 à 2, et comprenant un additif ignifuge intumescent, où la composition contient en outre de l'eau en tant qu'agent de réticulation et un catalyseur, lequel est choisi parmi les composés aminés, **caractérisé en ce que** l'agent de réticulation est séparé du polymère alcoxy-fonctionnel de manière à inhiber la réaction.

2. Composition selon la revendication 1, où le polymère comprend un squelette, lequel est choisi dans le groupe constitué par une chaîne alkyle, un polyéther, le polyester, le polyétherester, le polyamide, le polyuréthane, le polyester uréthane, le polyéther uréthane, le polyétherester uréthane, le polyamide uréthane, la polyurée, la polyamine, le polycarbonate, l'ester polyvinylique, le polyacrylate, la polyoléfine, le polyisobutylène, le polysulfure, le caoutchouc, le néoprène, la résine phénolique, la résine époxy et la mélamine.

3. Composition selon la revendication 1 ou 2, où le polymère à fonctionnalité alcoxysilane porte au moins 2 groupes silane à fonctionnalité alcoxy.

4. Composition selon l'une quelconque des revendications précédentes, où l'additif ignifuge intumescent comprend un mélange, lequel contient au moins un catalyseur de déshydrogénation, au moins un propulseur et éventuellement au moins un fournisseur de carbone et/ou au moins un composé thermoexpansible.

5. Composition selon la revendication 4, où l'additif ignifuge comprend en outre un stabilisateur de croûte de cendres.

6. Composition selon l'une quelconque des revendications précédentes, où la composition comprend en outre un autre agent de réticulation (agent de co-réticulation).

7. Composition selon l'une quelconque des revendications précédentes, où la composition contient en outre au moins un autre composant choisi parmi les plastifiants, les capteurs d'eau, les charges inorganiques et/ou d'autres additifs.

8. Utilisation de la composition selon l'une quelconque des revendications 1 à 7 en tant que revêtement.

9. Utilisation selon la revendication 8 pour le revêtement d'éléments de construction en acier ou de composants non métalliques.

10. Utilisation selon l'une des revendications 8 à 9 en tant que couche ignifuge.

11. Objets durcis obtenus par durcissement de la composition selon l'une quelconque des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010131037 A1
- DE 102008000360 A1
- DE 102009028640 A1
- DE 102010038768 A1
- DE 102010038774 A1
- GB 2007689 A1
- EP 139401 A1
- US 3969291 A1
- EP 1489136 A1
- US 4442157 A
- US 3562197 A
- GB 755551 A
- EP 138546 A1
- WO 2011157562 A1
- WO 2013003053 A1

**In der Beschreibung aufgeführte Nicht-Patentliteratur**

- **S. V LEVCHIK ; E. D WEIL.** *Polym. Int.,* 2004, vol. 53, 1901-1929